# EUROPEAN PATENT SPECIFICATION

(11) **EP 1 837 742 B1**
(45) Date of publication and mention of the grant of the patent: **04.12.2013**
(21) Application number: 07104339.2
(22) Date of filing: 16.03.2007
(51) Int. Cl.: G06F 3/041, G06F 3/047, G06F 3/046, G06F 3/044, G06F 3/033

(54) **Display device, sensor panel, position-detecting device position-inputting device and computer system.**
Anzeigevorrichtung, Sensortafel, Positionsbestimmungsvorrichtung, Positionseingabevorrichtung und Computersystem
Dispositif d'affichage, panneau capteur, dispositif de détection de la position, dispositif pour l'entrée de la position et système informatique

(30) Priority: 22.03.2006 JP 2006078959
(43) Date of publication of application: 26.09.2007
(73) Proprietor: Wacom Co., Ltd., Saitama 349-1148 (JP)
(72) Inventor: Ito, Masamitsu, Saitama-ken Saitama 349-0218 (JP)
(74) Representative: Richardt Patentanwälte GbR

(56) References cited:
- EP-A1- 0 716 390
- EP-A2- 1 298 803
- US-A1- 2001 020 987

## Description

### BACKGROUND OF THE INVENTION

### Field of the Invention:

The present invention relates to: a display device; a sensor panel provided in a display device; a position-detecting device including the sensor panel; a position-inputting device having the position-detecting device and a position indicator; and a computer system including the position-inputting device.

### Description of the Related Art:

Hitherto, position-detecting devices which detect positions indicated by pen-type position indicators have been known. Also, Japanese Published Patent Application No. 2002-215317, for example, discloses a product in which a position-detecting device integrally formed with a liquid crystal display device is used and a position-inputting operation can be carried out by operating a position indicator on a display screen. EP 1 298 803 A2 discloses a multiple input proximity detector and touchpad system. US 2001/020987 A1 teaches a position sensing liquid crystal display and method for fabricating the same. EP 0716 390 A1 discloses a position detecting device and its method.

Typically, a display device such as a liquid crystal display device generates a lot of noise. Also, if other devices such as a substrate and the like are provided below a display device in an overlapped manner, a lot of noise is brought about by those devices, substrate and the like.

In order to cope with the noise, with respect to the above-mentioned position-detecting device in related art, there is performed such a treatment as to adjust the timing of picture scanning in the liquid crystal display device and the timing of signal transmission from the position indicator to the position-detecting device.

### SUMMARY OF THE INVENTION

Regarding the above-mentioned position-detecting device in related art, a loop coil for detecting an operation conducted by the position indicator is provided behind a liquid crystal display panel, and this loop coil and the position indicator send and receive signals with the liquid crystal display panel in between.

In this case, it is necessary to cope with the above-mentioned noise. As a completely different kind of method for solving the above-mentioned problem, the applicant has devised an idea of placing a loop coil of a position-detecting device on the display surface of a liquid crystal display panel. If this method is used, since the wiring of the loop coil is located on a display screen, it is feared that the wiring may be visible when the display screen is watched, which may cause an effect on the visibility of the display screen.

In light of the above-mentioned problems, the present invention aims at providing wiring on the display surface side of a display screen in an overlapped manner without reducing the visibility of the display screen.

Embodiments of the invention are as claimed in the independent claims; the dependent claims describe preferred embodiments.

According to an embodiment of the present invention, there is provided a sensor panel for arrangingover the display surface of an external display device, which includes a plurality of detection conductors, each of which has a first, base line portion formed of a first conductor of a predetermined, first width and has a second, narrow line portion formed by a plurality of second, narrow-line conductors being connected in parallel whose ends on both sides are connected to the base line portion and which have a second width, narrower than the above first, predetermined width. Further, at least a part of the plurality of detection conductors mentioned above, which overlaps with a display region of the display device, is formed of the narrow line portions.

According to the above structure, detection conductors of a sensor panel which is provided being overlapped with the display surface of a display device are formed of narrow line portions with respect to a part which overlaps a display region of the display device. Since narrow-line conductors are formed to be small in width, the narrow-line conductors themselves are difficult to be seen, and the visibility of screen shown by the display device is not reduced. Therefore, on the display surface of a display device can be provided a sensor panel including detection conductors with almost no effect on the visibility of screen. Also, since a plurality of narrow-line conductors are connected in parallel, advantageously, an electric resistance value is small even if the width thereof is reduced.

Also, in the present invention, there may be provided a structure in which parallel wiring portions where the narrow-line conductors are disposed parallel to each other are formed in the detection conductor, and a space between the narrow-line conductors in the parallel wiring portions is equal to a space between the parallel wiring portions next to each other. In this case, the alignment of the narrow-line conductors in the parallel wiring portions and the alignment of the narrow-line conductors positioned at both ends of the parallel wiring portions next to each other are equal, and so the alignment of the parallel wiring portions is uniform in the whole of a display region. Hence, there is an advantage that the detection conductor is difficult to be seen and that the effect on the visibility of pictures is therefore further reduced.

According to an embodiment of the present invention, there is provided a display device which has a display screen that includes: a light-transmissible display conductor extending in the form of a plane, and a detection conductor having a base line portion formed of a conductor of a predetermined width and having a narrow line portion formed by a plurality of narrow-line conductors being connected in parallel whose ends on both sides are connected to the base line portion and which are narrower than the above predetermined width. Further, the detection conductor is provided on the same plane on which the display conductor is provided.

According to the above structure in a display device having a display screen, a detection conductor capable of being used as a sensor is provided on the same plane as a display conductor of the display device, and this detection conductor has a narrow line portion. Formed in such a manner as to be small in width, this detection conductor is difficult to be seen, so that a display device capable of being used as a sensor can be obtained without reducing the visibility of the display screen. Further, since there are provided a plurality of narrow-line conductors connected in parallel, an electric resistance value is small even if the width thereof is reduced, which is advantageous as a sensor. Furthermore, since the display conductor and the detection conductor are provided on the same plane, the detection conductor can be provided without increasing the thickness of the display device, enabling this structure to be applied to a thin display device without difficulty.

Further, the above-described display device displays the screen by changing the state of a plurality of pixels arranged in a predetermined direction. The sensor panel may be provided so that the center of each pixel in the display device is positioned in the middle of narrow-line conductors adjacent to each other in the parallel wiring portions. In this case, within the pixels, the area covered by the narrow-line conductors becomes the minimum. Hence, there is an advantage that the effect on the visibility of screen shown by the pixels is further reduced.

Also, in embodiments of the present invention, the above-described display device displays the screen by changing the state of a plurality of pixels arranged in a predetermined direction. The narrow-line conductors in the parallel wiring portions may be provided on the borders between pixels adjacent to each other. In this case, provided on the borders between the pixels, the narrow-line conductors are even more difficult to be seen, so that the effect on the visibility of screen due to the sensor panel can further be reduced.

Further, in embodiments of the present invention, the detection conductor may be formed of a loop coil of one turn or a plurality of turns.

According to an embodiment of the present invention, there is provided a structure including the above-mentioned sensor panel and a detection circuit which, by detecting electromagnetic action between the detection conductors provided in the sensor panel and an external position indicator, detects a position-inputting operation conducted by the position indicator.

According to the above structure, a position-inputting operation conducted by a position indicator is detected using detection conductors in a sensor panel provided on the display surface of a display device, without reducing the visibility of the screen of the display device. Here, the detection conductors have been provided being overlapped with the display surface of the display device, so that the distance between the detection conductors and the position indicator is short and there is no noise-generating object in between, causing a position-inputting operation to be detected easily and surely. Furthermore, when the detection conductors are used to transmit signals to the position indicator, drive at low voltage can be made based on the relationship between an electric current and electric resistance value of detection conductors with respect to the signal transmission, thus enabling a position-detecting device of low power consumption to be obtained.

In the present invention, the above-described detection circuit may include: a selector which selects one detection conductor from the plurality of detection conductors provided in the sensor panel; a signal detector which, when a signal has been transmitted from the position indicator, detects the signal received by the detection conductor selected by the selector; and a detection processor which calculates a position indicated by the position indicator based on a signal detected by the signal detector. In this case, a position is detected based on a signal received by a detection conductor of the sensor panel provided on the display surface of the display device, hence there is an advantage that the signal is surely received to detect the position.

Also, in the present invention, there may be provided a structure further including a display device which displays screen, in which the above-described sensor panel is provided being overlapped with the display surface of the display device.

According to an embodiment of the present invention, there is provided a position-inputting device which has a position indicator provided with at least one coil and has a position-detecting device detecting a position-inputting operation conducted by the position indicator, in which the position-detecting device includes the above-mentioned sensor panel and a detection circuit which, by detecting electromagnetic action between the detection conductors provided in the sensor panel and a coil/coils included in the position indicator, detects a position-inputting operation conducted by the position indicator.

Further, according to an embodiment of the present invention, there is provided a computer system including a position-inputting device which has a position indicator provided with at least one coil and has a position-detecting device detecting a position-inputting operation conducted by the above-described position indicator, in which the position-detecting device includes the sensor panel and a detection circuit which, by detecting electromagnetic action between the detection conductors provided in the sensor panel and a coil/coils included in the position indicator, detects a position-inputting operation conducted by the position indicator.

According to the above structure, a position-inputting operation conducted by a position indicator is detected using detection conductors in a sensor panel provided on the display surface of a display device, without reducing the visibility of screen of the display device, and so a position-inputting operation can be detected easily and surely. Furthermore, when the detection conductors are used to transmit signals to the position indicator, drive at low voltage can be made based on the relationship between an electric current and electric resistance value of detection conductors with respect to the signal transmission, thus enabling a position-inputting device and the whole of a computer system including the position-inputting device to be of low power consumption.

According to embodiments of the present invention, a sensor panel including detection conductors can be provided being overlapped with the display surface of a display device without reducing the visibility of the screen of the display device. Accordingly, the effect of magnetic noise from the rear surface of the display device on the detection conductors can surely be prevented, and the sensor panel can be provided in display devices of various sizes and shapes. Furthermore, the sensor panel can be assembled into the display device without difficulty, enabling a production process to be efficient.

According to a further embodiment there is provided a method of producing a sensor device. The method involves providing a display, forming a detection conduction portion of a first loop coil group superimposed on the display, superimposing an insulating layer on the first loop coil group, and superimposing a second loop coil group on the insulating layer.

### BRIEF DESCRIPTION OF THE DRAWINGS

In the following, embodiments of the invention will be described, by way of example only, and with reference to the drawings in which:
FIG. 1 is a schematic external view showing a configuration of a computer system according to an embodiment of the present invention;
FIG. 2 is a sectional view showing a structure of a relevant part of a display input portion;
FIG. 3 is a plan view schematically showing pixels arranged in a display panel;
FIG. 4 is an exploded perspective view showing a schematic structure of a relevant part of loop coil groups;
FIG. 5 is an enlarged plan view showing in detail a structure of a relevant part of loop coils;
FIG. 6 is an enlarged plan view showing a positional relationship between loop coils and pixels with respect to a relevant part thereof;
FIG. 7 is a block diagram showing a configuration of a tablet computer with respect to functions thereof;
FIG. 8 is a diagram showing a configuration of internal circuits of a position-detecting portion;
FIG. 9 is an enlarged plan view showing a structure of a relevant part of loop coils in a first modified example of an embodiment of the present invention; and
FIG. 10 is a partly-broken perspective view showing a structure of a display panel in a second modified example of an embodiment of the present invention.

### DESCRIPTION OF THE PREFERRED EMBODIMENTS

Embodiments of the present invention will be explained in the followings with reference to the drawings.

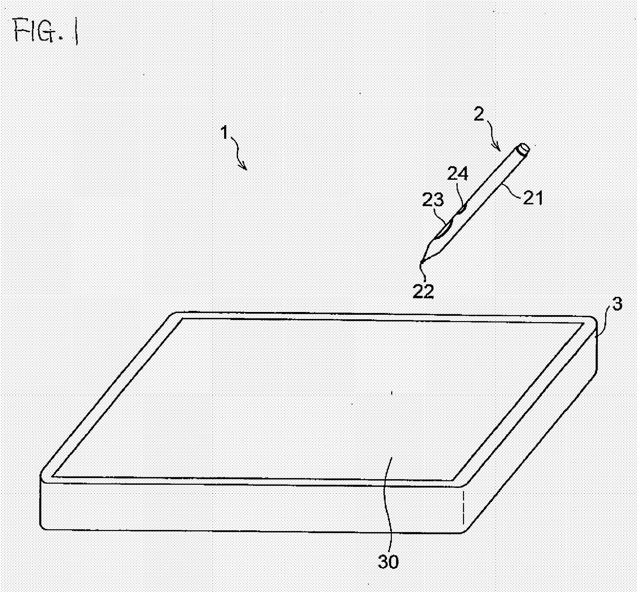

FIG. 1 is a schematic external view showing a configuration of a computer system 1 according to an embodiment to which the present invention is applied. As shown in FIG. 1, the computer system 1 includes a tablet computer 3 and a position indicator 2 for conducting a position-inputting operation on the tablet computer 3. The tablet computer 3 includes a display input portion 30 which displays various screens and which has the function of detecting the position-inputting operation conducted by the position indicator 2.

As shown in FIG. 1, the upper surface of the display input portion 30 is approximately rectangular. In the display input portion 30, an X-Y orthogonal coordinate system is hypothetically set, in which X direction corresponds to the long-side direction of the rectangular and the Y direction corresponds to the short-side direction thereof and when the position-inputting operation is conducted by the position indicator 2, the X coordinate and the Y coordinate indicated by the position indicator 2 are detected.

The tablet computer 3 is a personal computer having the function of executing various application programs in response to a position-inputting operation by the position indicator 2. In the tablet computer 3, the surface of the display input portion 30 exposed on the upper-side surface of the tablet computer 3 serves as a display portion which displays various screens each relating to a program being executed and also serves as an input area capable of being operated by the position indicator 2. The position-inputting operation by the position indicator 2 is detected within this input area.

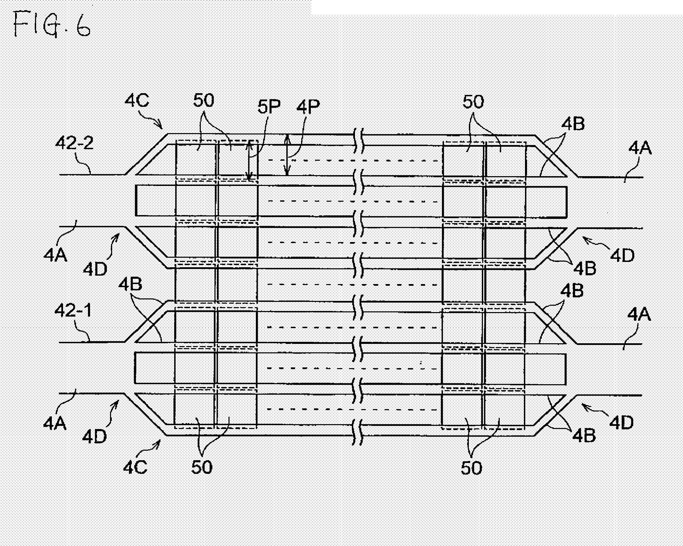

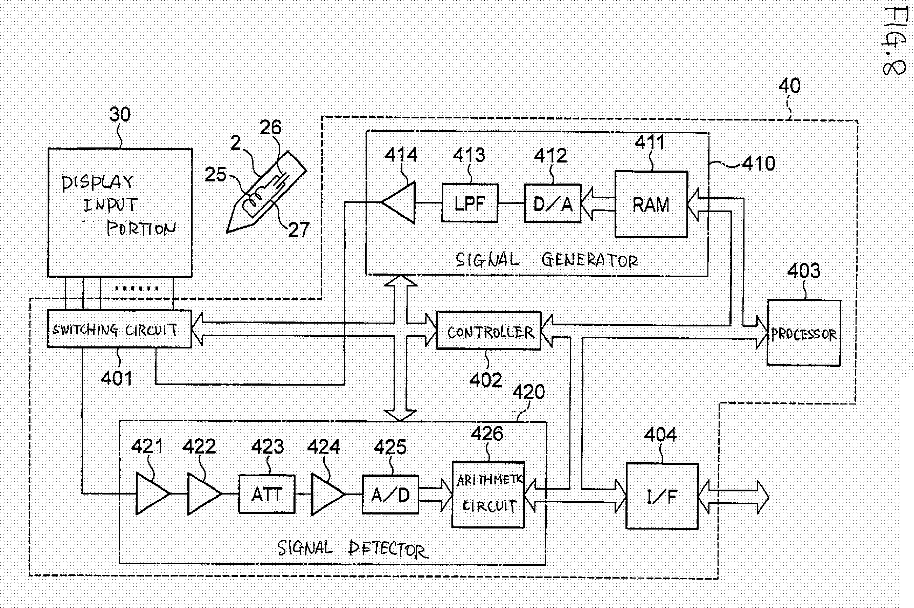

The position indicator 2 has a pen-type casing 21, and a core 22 protrudes from the end of this casing 21. Further, switches 23 and 24 pressed and operated by the fingers of a user are arranged on the side surface of the casing 21. The position indicator 2 incorporates a resonance circuit 27 (see FIG. 8) including a coil 25 (FIG. 8) and a capacitor 26 (FIG. 8), and by sending and receiving radio signals between this resonance circuit 27 and a position-detecting portion 4 (position-detecting device) shown in FIG. 6, the position indicator 2 indicates a position to the position-detecting portion 4. The position indicator 2 and the position-detecting portion 4 constitute a position-inputting device.

At the time of a position-inputting operation, the core 22 protruding from the end of the position indicator 2 is pressed against the surface of the display input portion 30 by the user. The position indicator 2 generates a signal corresponding to the pressing force (writing pressure) applied to the core 22 and then transmits the signal to the position-detecting portion 4 by means of the function of the resonance circuit 27.

Further, the resonance circuit 27 included in the position indicator 2 generates a signal corresponding to the operational states of the switches 23 and 24, and then transmits the signal to the position-detecting portion 4. The position input in the position-inputting operation, writing pressure at the time of the operation, and operational states of the switches 23 and 24 can be detected in the position-detecting portion 4, based on the signal transmitted from the resonance circuit 27.

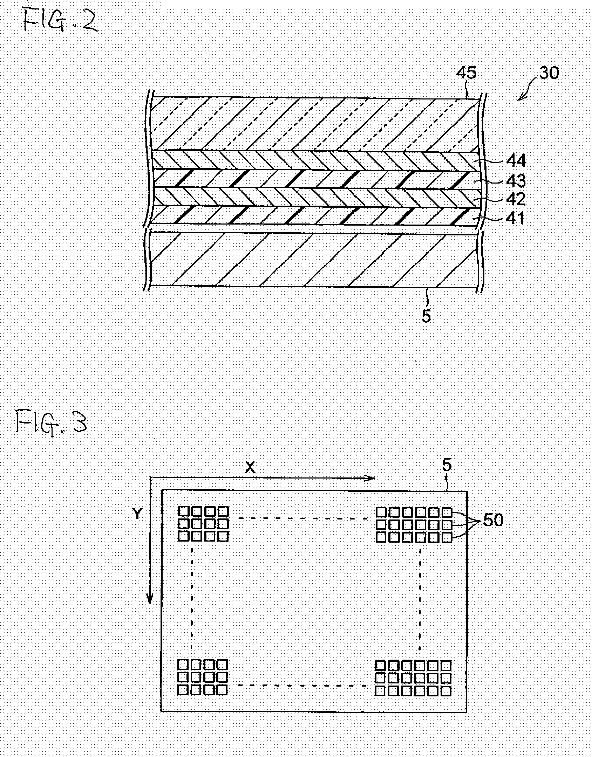

FIG. 2 is a sectional view showing a structure of a relevant part of the display input portion 30, particularly showing the structure on the display surface side of a display panel 5.

As shown in the sectional view of FIG. 2, the display input portion 30 has a structure in which an insulating layer 41, a loop coil group 42, an insulating layer 43 and a loop coil group 44 are superimposed on the display surface of the display panel 5 (display device) in this order, and a surface panel 45 is exposed on the surface of the tablet computer 3. It should be noted that although there is a space between the display panel 5 and the insulating layer 41 in the structure shown in FIG. 2, this space is not necessarily provided.

The insulating layers 41 and 43 are made of plates or films formed of insulating material such as PET resin or various other resins and are light-transmissible (transparent) to the extent that the visibility of screen shown on the display panel 5 can be secured. The insulating layer 41 is provided for the purpose of protecting and insulating the loop coil group 42 and is provided at least to cover the surface of a conductor constituting the loop coil group 42, preferably to cover almost the whole of the loop coil group 42. Further, the insulating layer 43 is provided for the purpose of insulating the loop coil group 42 from the loop coil group 44 and is provided at least to cover either the surface of a conductor forming the loop coil group 42 or the surface of conductor forming the loop coil group 44, preferably to cover almost the whole surfaces of both the loop coil groups 42 and 44.

These insulating layers 41 and 43 are formed by the method of coating, vapor deposition, printing (including spraying), adhesion or the like.

In the loop coil groups 42 and 44, a plurality of loop coils (detection conductors), each of which is formed of a conductor made of a metal such as copper or silver, a compound of those metals or the like and has one turn or a plurality of turns (preferably two turns), are disposed parallel to each other. The conductor forming each loop coil may be an opaque conductor made of the above-mentioned metals or the like, and may be a conductor referred to as a transparent conductive material such as ITO (Indium-Tin Oxide). The loop coils in the loop coil groups 42 and 44, whose shape will be described later on, are formed by the method of coating, vapor deposition, printing (including spraying), adhesion or the like, or by etching (including etching following photolithography) planar conductors formed by those methods.

The surface panel 45 is a plate made of glass, acrylic, a synthetic resin such as polycarbonate or the like, which is light-transmissible (transparent) to the extent that the visibility of screen shown on the display panel 5 can be secured and desirably which is insulative. On the surface of this surface panel 45 exposed on the surface of the display input portion 30 may be formed a layer which has an anti-glare effect, antireflection effect or the like, or may be placed a layer for enhancing abrasion resistance. Further, on the surface of the surface panel 45 may be provided a layer having friction coefficient different from that of the surface panel 45 so as to discriminate the sense given when the core 22 of the position indicator 2 is caused to touch the surface of the surface panel 45.

The structure shown in FIG. 2 can readily be obtained, for example, by preparing a wiring substrate (sensor panel), in which part made by combining the loop coil groups 42 and 44, insulating layers 41, 43 with the loop coil groups 42, 44 in between and the display panel 5 is integrally formed by means of adhesion or the like, and then by mounting this wiring substrate on the display surface side of the display panel 5.

FIG. 3 is a plan view schematically showing pixels 50 arranged in the display panel 5.

In the present embodiment, an LCD (liquid crystal display) panel is used as the display panel 5. In the display panel 5, the pixels 50 serving as a display element capable of switching the transmittance of light between two levels or more are disposed in the form of a matrix. More specifically, there is a structure in which the pixels 50 are linearly disposed in the X direction and Y direction of an X-Y orthogonal coordinate system hypothetically set as described above. In the following explanations, within the region of the display panel 5 where the pixels 50 are provided, the region which is visible when seen from outside the tablet computer 3 will be referred to as a display region.

In the present embodiment, a display panel 5 formed of a 12-inch liquid crystal display panel of XGA (horizontal 1024 dots × vertical 768 dots) display is explained as an example. This display panel 5 has horizontal 1024 pixels 50 in the X direction and vertical 768 pixels in the Y direction.

The display panel 5 may be a color LCD panel which has pixels 50 capable of displaying three colors corresponding to the three primary colors R (red), G (green) and B (blue), or may be a monochrome LCD panel which has pixels 50 capable of displaying only one color.

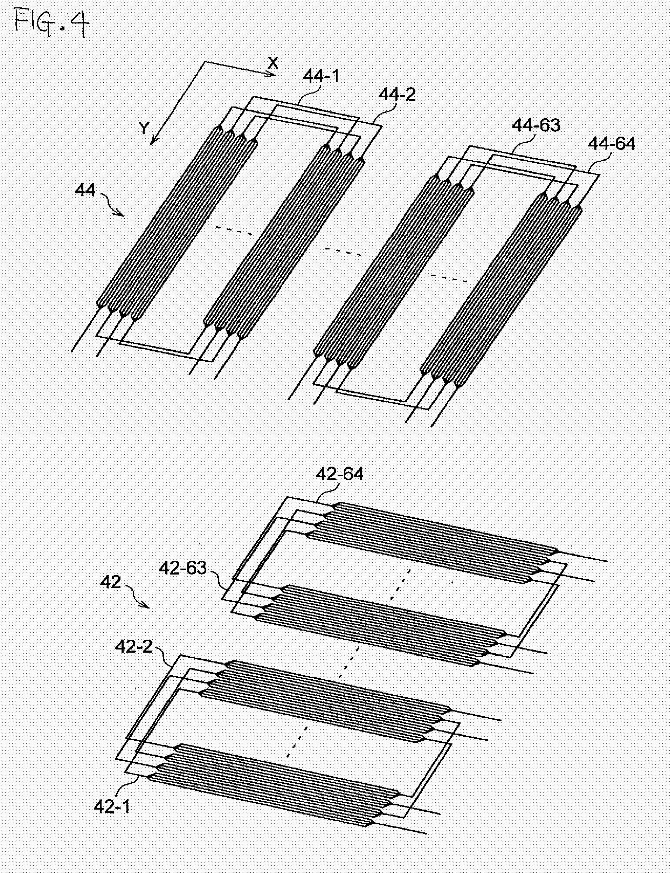

FIG. 4 is an exploded perspective view showing a schematic structure of a relevant part of the loop coil groups 42 and 44. Note that the insulating layers 41 and 43 and the like are not shown in FIG. 4.

As shown in FIG. 4, the loop coil group 42 includes sixty-four loop coils 42-1 to 42-64 disposed along the Y direction of the above-mentioned X-Y coordinate system.

Also, the loop coil group 44 includes sixty-four loop coils 44-1 to 44-64 disposed along the X direction of the above-mentioned X-Y coordinate system.

In the present embodiment, an example is explained in which each of these loop coils 42-1 to 42-64 and 44-1 to 44-64 is made of a two-turn loop coil that forms a double ring in a plane where the above-mentioned X-Y coordinate system is set.

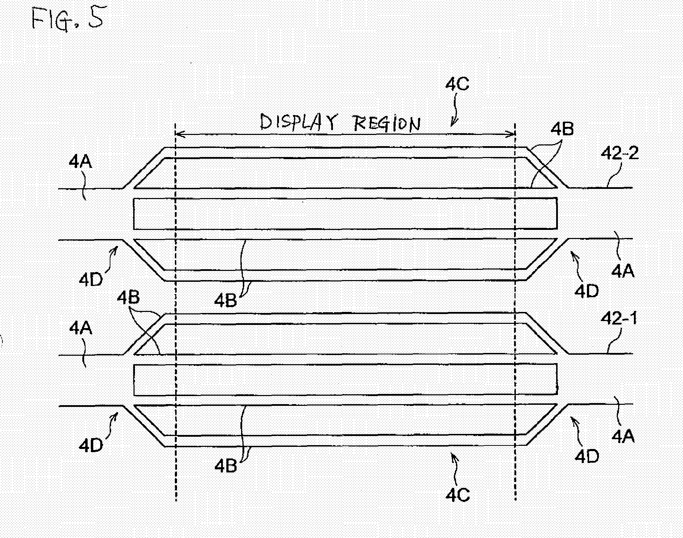

FIG. 5 is an enlarged plan view showing in detail a structure of a relevant part of the loop coils in the loop coil groups 42 and 44, and particularly showing a part of the loop coils 42-1 and 42-2 which overlaps with a display region of the display panel 5. The structure of all the loop coils in the loop coil groups 42 and 44 is similar to that of the loop coils 42-1 and 42-2 shown in FIG. 5.

As shown in FIG. 5, the loop coils 42-1 and 42-2 each have a base line portion 4A of a predetermined width, and a narrow line portion 4C formed from four narrow lines 4B (narrow-line conductors) narrower than the base line portion 4A. Each of the four narrow lines 4B is electrically connected to the base line portion 4A via a branch-connecting portion 4D. Here, the base line portion 4A and the narrow lines 4B only need to be conducted. The base line portion 4A and the narrow lines 4B may be connected after being formed separately, or the base line portion 4A and the narrow lines 4B may be formed integrally.

As regards the narrow line portion 4C, the four narrow lines 4B are disposed parallel to each another at regular intervals, in the part overlapped with the display region of the display panel 5. This part corresponds to a parallel wiring portion. Further, a space between the loop coil 42-1 and the loop coil 42-2 next to each other is equal to the interval between the four narrow lines 4B. Therefore, the loop coil groups 42 and 44 have a structure in which a large number of (1024 in the present embodiment) narrow lines 4B are disposed at regular intervals. The parallel wiring portion may also comprise a number of narrow lines connected in parallel but not spatially disposed parallel to each other.

The part of the loop coils 42-1 and 42-2 overlapped with the display region of the display panel 5 is made of the narrow lines 4B, and so are the other loop coils. Thus, in the display input portion 30, only the narrow lines 4B are visible from the user with respect to the loop coils in the loop coil groups 42 and 44, while the base line portion 4A is positioned in a place not seen from the outside in a casing of the tablet computer 3, for example.

Here, regarding the specific width of the base line portion 4A and the narrow lines 4B, the width can arbitrarily be decided provided that each of the narrow lines 4B is narrower than the base line portion 4A. However, desirably, the width is decided from the viewpoints described below.

First, since the loop coil groups 42 and 44 are provided on the surface side of the display panel 5, it is preferable that the loop coil groups 42 and 44 themselves be low in visibility and difficult to be seen from the user so as not to reduce the visibility of screen shown on the display panel 5.

Second, the loop coil groups 42 and 44 are used for sending and receiving signals as described later on. Therefore, a smaller electric resistance value of the loop coil groups 42 and 44 is favorable, because a high electric current can flow at lower voltage and thus the signal intensity at the time of transmission and reception can be strengthened. Judging from the first viewpoint, it is preferable that the narrow lines 4B be small in width. Specifically, it is preferable that the width be 30µm (micrometer) or less each, because with such width the narrow lines become very low in visibility and can hardly be seen from the user even when opaque conductors (for example, copper or silver, a compound thereof or the like) are used for the loop coil groups 42 and 44. Further, if the narrow lines 4B are formed by etching, it is preferable that the width be 10µm or more each, because the narrow lines can easily be formed.

Judging from the second viewpoint, it is preferable that the narrow lines 4B be large in width. However, as shown in FIG. 5, since each of the loop coils in the loop coil groups 42 and 44 in the present embodiment has a structure in which a plurality of narrow lines 4B are connected in parallel to the base line portion 4A, the electric resistance value of the loop coils as a whole can be lowered even if each narrow line 4B is thin. Therefore, signals can be sent and received without difficulty even if the width of each narrow line 4B is above-mentioned 30µm or less. Further, if the width of each narrow line 4B is 30µm or less as described above, opaque conductors can be used without problems, so that the electric resistance value of the loop coils can further be lowered particularly when using conductors having a small electric resistance value (for example, copper or silver or a compound thereof).

Hence, it is greatly preferable that the width of the narrow lines 4B be 30µm or less each, because the loop coils themselves can be made low in visibility and the electric resistance value can be lowered. Further, it is preferable that conductors constituting the loop coils have a small electric resistance value.

In addition, in the case where copper is used for the material of the loop coils, it is preferable that the surface exposed and visible on the surface of the display input portion 30 be blackened by oxidation or the like, because it further decreases the visibility.

In addition, if a transparent conductive material (for example, ITO) is used for the material of the loop coils, the narrow lines 4B become very low in visibility, so that the width of the narrow lines 4B may be larger than the above-mentioned value.

Also, there is no particular restriction on the width of the base line portion 4A, and for example, the width can be made large to the extent that sixty-four loop coils can be provided for each of the loop coil groups 42 and 44 without difficulty.

Further, the pitch of the narrow lines 4B of each loop coil is equal to the pitch of the pixels 50 in the display panel 5.

FIG. 6 is an enlarged plan view showing the positional relationship between the loop coils in the loop coil groups 42, 44 and the pixels 50 with respect to a relevant part thereof. It should be noted that although only two loop coils, namely, the loop coils 42-1 and 42-2 are shown in FIG. 6 for the convenience of explanation, the other loop coils are similarly arranged in the loop coil groups 42 and 44.

As shown in FIG. 6, the pitch 4P of the narrow line 4B in the loop coils 42-1 and 42-2 is equal to the pitch 5P of the pixels 50. Thus, the arrangement of the pixels 50 and the arrangement of the narrow lines 4B are equal, forming a uniform geometrical arrangement in the display region of the display panel 5. Hence, advantageously, the narrow lines 4B are inconspicuous and difficult to be seen.

Further, regarding the structure shown in FIG. 6, narrow lines 4B are positioned between adjacent pixels 50. Regarding this structure, the area in which the pixels 50 are covered by the narrow lines 4B becomes the smallest, and the area in which each pixel 50 is covered by the narrow lines 4B becomes virtually uniform. Therefore, the narrow lines 4B are even more difficult to be seen.

If seen from a different viewpoint, the structure shown in FIG. 6 can be considered to be such a structure that the narrow lines 4B of the loop coils are positioned on the borders between pixels 50 adjacent to each other, thereby lowering the visibility of the narrow lines 4B. It should be noted that although one pixel 50 is positioned between two narrow lines 4B in the present embodiment, a plurality of pixels 50 may be disposed between two narrow lines 4B, for example. In this case also, since narrow lines 4B extend on the borders between pixels 50, the narrow lines 4B are difficult to be seen. Also, a plurality of narrow lines 4B may be positioned above one pixel 50. In this case, since the size of a pixel 50 is large in comparison with the width of a narrow line 4B, narrow lines 4B may be difficult to be seen. In particular, one pixel 50 includes three segments of R, G and B in the display panel 5 that is a liquid crystal display panel for color display. In this case, being provided to extend on the borders between the segments, favorably the narrow lines 4B do not interfere with display even if a plurality of narrow lines 4B are positioned above one pixel 50.

Next, the configuration and operation of a tablet computer 3 including the position-detecting portion 4 having the above-described structure will be explained.

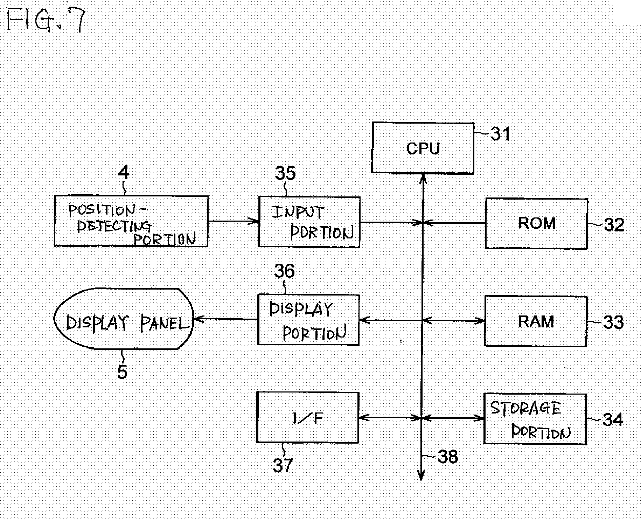

FIG. 7 is a block diagram showing a configuration of the tablet computer 3 with respect to functions thereof.

The tablet computer 3 includes: a CPU (central processing unit) 31 which controls each portion of the tablet computer 3 by executing control programs of various kinds; a ROM (read only memory) 32 which stores control programs and the like executed by the CPU 31; a RAM (random access memory) 33 which functions as a work area that temporarily stores programs data and the like executed by the CPU 31; and a storage portion 34 which stores control programs and application programs executed by the CPU 31, and data relating to these programs.

The tablet computer 3 further includes: the position-detecting portion 4 which detects a position-inputting operation conducted by the position indicator 2 (see FIG. 1) at the display input portion 30 (FIG. 1); an input portion 35 which generates operational information corresponding to the position-inputting operation detected by the position-detecting portion 4, and then outputs it to the CPU 31; a display portion 36 which drives a display panel 5 after analyzing screen display data generated by the CPU 31; the display panel 5 functioning as a display device which is driven by the display portion 36 to display screen including various display objects such as characters, still images and moving images; and an I/F 37 which is connected to an apparatus outside the tablet computer 3. The above-mentioned portions are connected through a bus 38.

The CPU 31 controls each portion of the tablet computer 3 by retrieving and executing basic control programs stored in the ROM 32. Further, the CPU 31 retrieves application programs stored in the storage portion 34 and deploy them in the work area of the RAM 33 to execute them. Accordingly, various kinds of data processing are performed. Also, during the execution of a basic control program and an application program, the CPU 31 generates screen display data for displaying a screen which relates to the relevant programs and outputs them to the display portion 36 to be displayed on the display panel 5. Further, if operational information corresponding to a position-inputting operation conducted by the position indicator 2 is input from the input portion 35, the CPU 31 discriminates the content indicated by the position-inputting operation, based on this operational information and the screen display data output to the display portion 36, and then performs an operation corresponding to the indicated content that is discriminated.

The position-detecting portion 4 is provided as hardware arranged in the display input portion 30 (FIG. 1). In response to a position-inputting operation conducted by the position indicator 2 on the surface of the display input portion 30 that is an input area, the position-detecting portion 4 detects: the position indicated by this position-inputting operation, the writing pressure at the time of the operation and the operational states of the switches 23 and 24. Then, the position-detecting portion 4 outputs an operational signal including the above detected results to the input portion 35. Subsequently, the input portion 35 generates operational information corresponding to the position-inputting operation conducted by the position indicator 2, by analyzing the operational signal input from the position-detecting portion 4, and then outputs the operational information to the CPU 31.

FIG. 8 is a diagram showing the configuration of an internal circuit 40 of the position-detecting portion 4.

To facilitate understanding, FIG. 8 shows an internal circuit of the position indicator 2 and the display input portion 30 as well as the internal circuit 40.

As shown in FIG. 8, the position indicator 2 incorporates a resonance circuit 27 including a coil 25 and a capacitor 26. The values of the coil 25 and capacitor 26 are set such that a predetermined frequency *fo* is made a resonance (tuning) frequency. In this resonance circuit 27, a capacitor not shown in the figure is connected to the capacitor 26 in parallel via the switches 23 and 24, so as to make the resonance frequency of the resonance circuit 27 small (low) when the switches 23 and 24 have been operated.

On the other hand, the internal circuit 40 of the position-detecting portion 4 includes a switching circuit 401, a controller 402, a processor 403, an interface 404, a signal generator 410 and a signal detector 420.

The switching circuit 401 is connected to the loop coils in the loop coil groups 42 and 44 provided in the display input portion 30, and to the signal generator 410 and signal detector 420. Controlled by the controller 402, the switching circuit 401 sequentially selects one loop coil from the loop coil groups 42 and 44 by switching from one loop coil to another. Also, the switching circuit 401 selects the signal generator 410 or the signal detector 420 by switching between them. Thus, the signal generator 410 or the signal detector 420 is connected to one loop coil in the loop coil groups 42 and 44, enabling a signal sending or receiving operation.

The signal generator 410 includes a random access memory (RAM) 411, a digital/analog converter (D/A converter) 412, a low-pass filter (LPF) 413 and a drive amplifier 414, and generates an AC signal with an arbitrary frequency, phase and amplitude.

The RAM 411 stores data corresponding to an AC signal to be generated among digital data of a plurality of bits, six bits in this case, corresponding to arbitrary AC signals prepared in advance in the processor 403 or in a host computer. The D/A converter 412 converts digital data retrieved from the RAM 411 into an analog pulse (PAM) signal in order. The low-pass filter 413 removes high-frequency components from the PAM signal, and outputs only envelope components thereof. The drive amplifier 414 amplifies the envelope components to a suitable level, and then outputs them as an AC signal intended. The writing and retrieval of data in the RAM 411, and the conversion in the D/A converter 412 are carried out according to information from the controller 402. It should be noted that instead of the RAM 411, a read-only memory in which digital data corresponding at least to one AC signal have been stored may be used, or a bus buffer may be used if a high-speed CPU is used for the processor 403.

The signal detector 420 includes a preamplifier 421, amplifiers 422 and 424, an attenuator (ATT) 423, an analog/digital converter (A/D) 425 and an arithmetic circuit 426, and detects the amplitude and phase angle with respect to arbitrary frequency components in received signals.

The preamplifier 421, amplifiers 422, 424 and attenuator 423 amplify received signals to an appropriate level. The A/D converter 425 samples the received signals after being amplified in a predetermined period, 250nsec in this case, and converts them to digital data of six bits. The arithmetic circuit 426 carries out a predetermined calculation, for example, a discrete Fourier transform calculation described later on, using the digital data, and obtains the amplitude and phase angle with respect to arbitrary frequency components in the received signals. Adjustment of the degree of attenuation in the attenuator 423, conversion in the A/D converter 425, and calculation in the arithmetic circuit 426 are carried out in accordance with information from the controller 402.

Based on an instruction from the processor 403, the controller 402 operates and controls the timing of each part according to a sequence set in advance. In addition, in order to reduce power consumption, when an electric wave is generated (transmitted), the signal detector 420 is put into a standby state; further, when an electric wave is received, the signal generator 410 is put into a standby state. Furthermore, when a signal has not been received, in other words, the position indicator has not been detected for a certain amount of time or more, both the signal generator 410 and signal detector 420 are put into a standby state.

The interface 404 is provided for exchanging data with the CPU 31 (FIG. 7) via the input portion 35 (FIG. 7), and includes at least two resistors directly linked to the input portion 35. The resistors have an FIFO memory structure, and the host computer retrieves data according to a prescribed data format by accessing these resistors several times.

The processor 403 is configured to have a known micro processor, ROM or RAM into which necessary programs and data have been written, and the like. The processor 403 performs calculation of the coordinate value of a designated point and the like, and executes data transmission with the host computer and total control of each part.

Operation of the internal circuit 40 will be explained in the followings.

First, the processor 403 initializes each part, and writes digital data corresponding to sinusoidal signals of a frequency fo prepared in advance, 500kHz in this case, to the RAM 411 of the signal generator 410. The digital data includes 128 pieces of 6-bit digital data indicating 16-wave sinusoidal signals of 500kHz capable of being transmitted within a predetermined transmission period (32µsec in this case).

Next, the processor 403 writes into the controller 402 data for sequentially switching among the loop coils 42-1 to 42-64 and the loop coils 44-1 to 44-64, and makes the controller 402 send and receive electric waves.

The sending and receiving of electric waves are carried out as follows. Specifically, the controller 402 sends a first switching data to the switching circuit 401, and starts up the signal generator 410. Also, the controller 402 sends data for selecting the signal generator 410 to the switching circuit 401. Thus, the signal generator 410 is connected to the loop coil selected by the switching circuit 401, thereby enabling signals to be sent and received.

Next, the controller 402 supplies the clock to cause digital data inside the RAM 411 to be sequentially transferred to the D/A converter 412 where D/A conversion is performed to make the digital data converted into PAM signals. As described earlier, the PAM signals are made into envelope components, namely into AC signals of 500kHz, with high-frequency components being removed by the low-pass filter 413. Further, the signals are sent to a switching portion 2 after being amplified up to an appropriate level by the drive amplifier 414. Note that, the above-mentioned PAM signals are practically unipolar signals only formed of plus components or minus components, and they become bipolar signals with DC elements being cut by the low-pass filter 413, the drive amplifier 414 or a capacitor inserted in between, not shown in the figure.

Then, AC signals sent out from the signal generator 410 are supplied to a loop coil through the switching circuit 401, and are transmitted as electric waves. On this occasion, if the position indicator 2 is held in a roughly upright state, namely, in the state of use on the display input portion 30, the electric waves excite the coil 25 in the position indicator 2, and generate induced voltages which synchronize with the AC signals in the resonance circuit 27 thereof.

On the other hand, when the aforementioned transmission period of 32µsec is over, the controller 402 puts the signal generator 410 into a standby state, starts up the signal detector 420 and sends out data for selecting the signal detector 420 to the switching circuit 401. Here, when the signal detector 420 is selected by the switching circuit 401, electric waves being transmitted from a loop coil disappear immediately, but induced voltages generated in the resonance circuit 27 in the position indicator 2 gradually reduce according to the loss and transmit electric waves from the coil 25. Since the electric waves excite the loop coils of the display input portion 30 in a reverse manner, induced voltages (received signals) due to the electric waves from the coil 25 are generated in the loop coil connected to the signal detector 420 via the switching circuit 401.

The received signals generated in the loop coil are amplified to an appropriate level by the preamplifier 421, amplifiers 422, 424 and attenuator 423 and then are input into the A/D converter 425. After starting up the signal detector 420, the controller 402 supplies the clock to cause the received signals to be sampled 128 times at intervals of 250nsec by the A/D converter 425 where A/D conversion is performed. Also, the controller 402 causes a later-mentioned discrete Fourier transform calculation to be performed by the arithmetic circuit 426, and then the result is sent to the processor 403. It should be noted that the time (32µsec) required for sampling the aforementioned received signals 128 times at intervals of 250nsec is referred to as a reception period.

Next, renewing and replacing data in the switching circuit 401 with second data, the controller 402 causes the above-mentioned series of processing to be carried out. In this series of operations, the next loop coil in the loop coil groups 42 and 44 is selected by the switching circuit 401, and then the operation of sending electric waves and the operation of receiving electric waves are conducted. Those operations are repeated by sequentially switching and selecting all the loop coils in the loop coil groups 42 and 44.

After the above-mentioned processes on all the loop coils in the loop coil groups 42 and 44 have finished, the processor 403 makes a calculation based on the pattern of a received signal level obtained in selecting each loop coil. Specifically, the processor 403 stores in advance the pattern of a received signal level obtained when the position indicator 2 is positioned on each loop coil; and the loop coil closest to the position indicator 2 is specified by performing calculation comparing the pattern stored and the pattern actually obtained when selecting each loop coil with interpolation calculation performed if necessary.

Then, the processor 403 generates operational signals which indicate coordinates corresponding to the loop coil specified, namely coordinates (absolute position coordinates) showing the position of the position indicator 2 in the input area, and outputs them to the input portion 35 (FIG. 7).

Also, the processor 403 detects a change in the resonance frequency of the resonance circuit 27 based on the received signals being selected in each loop coil, and the operational states of the switches 23 and 24 and the writing pressure applied to the core 22 are detected based on this change. Then the processor 403 generates operational signals indicating the operational states of the switches 23 and 24 in the position indicator 2 and indicating the writing pressure, and then outputs them to the input portion 35 (FIG. 7) via the interface 404.

As described above, a computer system 1 according to an embodiment of the present invention has a structure, in which loop coil groups 42 and 44 are provided on the display surface side of a display panel 5, in a display input portion 30 included in a position-detecting portion 4 which detects a position-inputting operation conducted by a position indicator 2. Further, each loop coil in the loop coil groups 42 and 44 is formed of a narrow line portion 4C made from a plurality of narrow lines 4B with respect to a part which overlaps with a display region of the display panel 5.

Therefore, in the display region of the display panel 5, visibility of loop coils in the loop coil groups 42 and 44 is extremely low, which prevents such inconvenience that the loop coils themselves are visible, and in addition, which prevents the visibility of screen shown on the display panel 5 from being reduced.

Further, in the narrow line portion 4C of each loop coil in the loop coil groups 42 and 44, since a plurality of the narrow lines 4B whose ends on both sides are connected to a base line portion 4A are connected in parallel, the electric resistance value of the narrow line portion 4C can be lowered as a whole even if each narrow line 4B is made thin.

Furthermore, in the case where a position-inputting operation conducted by the position indicator 2 is detected using the loop coil groups 42 and 44 provided on the display surface side of the display panel 5, the distance between the position indicator 2 and the loop coil groups 42 and 44 is extremely small and there is no noise-generating object intervening in between. Therefore, electromagnetic action between the position indicator 2 and the loop coil groups 42, 44 can be detected by the position-detecting portion 4 without difficulty. Hence, it becomes possible to drive an internal circuit 40 at low voltage due to the relationship between an electric current and an electric resistance value with respect to the action of transmitting a signal from the internal circuit 40 to the position indicator 2. Accordingly, there are obtained such advantages that power consumption of the internal circuit 40 can be reduced; power consumption of a tablet computer 3 is reduced and the tablet computer 3 can be driven for a long period of time.

Further, since the loop coil groups 42 and 44 are provided on the display surface side of the display panel 5, there are no restrictions imposed on the shape or size of the display panel 5. Therefore, display panels of various shapes and sizes can be used for the display panel 5, which enables costs to be lowered when a general-purpose display panel is used, or which enables the display panel 5 to be enlarged. In addition, since the loop coil groups 42 and 44 are provided in the display panel 5 without difficulty, assembly thereof can be easy, which enables a production process to be efficient.

In the above-described embodiment, each loop coil in the loop coil groups 42 and 44 has a structure in which four narrow lines 4B are connected to a base line portion 4A at a branch-connecting portion 4D. Note that the structure of this branch-connecting portion 4D may be modified to make an electric resistance value even smaller. In the followings, modified examples will be explained regarding this case.

### [Modified Example 1]

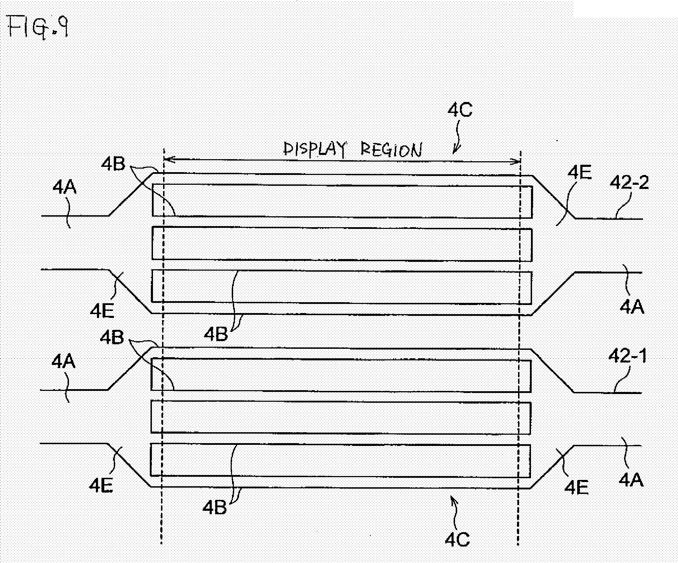

FIG. 9 is an enlarged plan view showing a structure of a relevant part of loop coils in a first modified example according to the embodiment of the present invention.

In FIG. 9, loop coils 42-1 and 42-2 are shown as an example. The structure of all loop coils in loop coil groups 42 and 44 is similar to the structure of the loop coils 42-1 and 42-2 shown in FIG. 5.

In the structure shown in FIG. 9, instead of the branch-connecting portion 4D of the loop coils 42-1 and 42-2 in the above-mentioned embodiment, a branch-connecting portion 4E is prepared. This branch-connecting portion 4E is a portion where a base line portion 4A and narrow lines 4B are connected, and is made of a conductor similar to the base line portion 4A and the narrow lines 4B. The branch-connecting portion 4E has a shape which expands between narrow line portions 4C at both ends of the narrow lines 4B, on the outside of a display region of a display panel 5. The area of this branch-connecting portion 4E is obviously larger than that of the above-mentioned branch-connecting portion 4D, so that it is expected that the electric resistance value may be small at the portion where the base line portion 4A and the narrow line portion 4C are connected. Thus, the power consumption of the internal circuit 40 can be lowered by lowering the electric resistance value of loop coils, and hence there is an advantage that the power consumption of a tablet computer 3 can be reduced even further.

### [Modified Example 2]

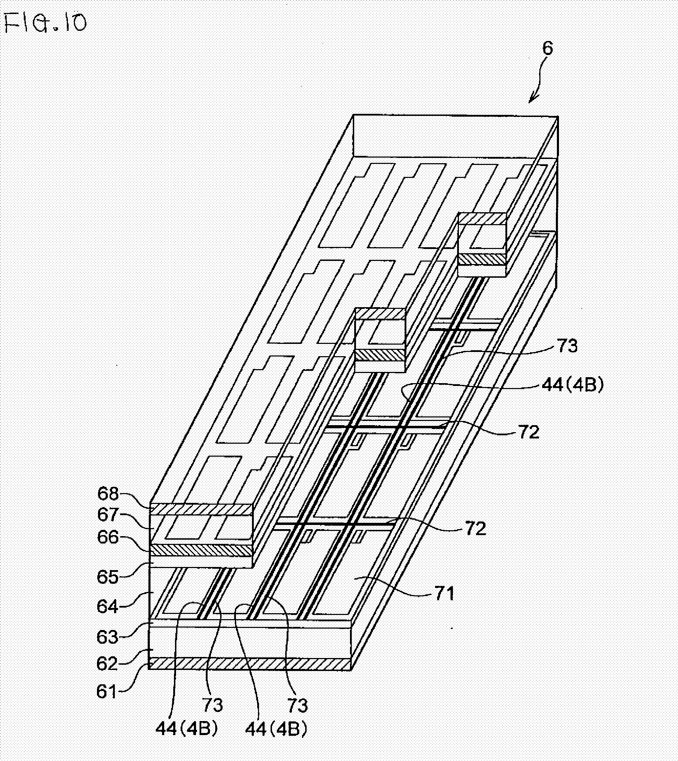

FIG. 10 is a perspective view showing a structure of a relevant part of the display panel in a second modified example, a part of which is shown in a broken manner, according to an embodiment of the present invention.

In this second modified example, loop coils of loop coil groups 42 and 44 are formed inside a liquid crystal display panel 6.

The liquid crystal display panel 6 shown in FIG. 10 includes: a polarization plate 61, a glass substrate 62, a transparent conductor layer 63, a liquid crystal layer 64, a transparent conductor layer 65, a color filter 66, a glass substrate 67 and a polarization plate 68 in this order as seen from the bottom layer; and the liquid crystal display panel 6 emits light by means of light transmitted from below (for example, backlight using a cold-cathode tube).

The liquid crystal display panel 6 is divided into segments, each of which shows any of the three colors of R (red), G (green) and B (blue), and segments of each color are combined to constitute one pixel 50. The color filter 66 has divided regions corresponding to each segment, and each region is colored R, G or B.

The transparent conductor layer 63 is a layer of a transparent conductor, for example, formed of ITO on the glass substrate 62 by vapor deposition, and segment electrodes 71 which correspond to respective segments are formed by dividing this conductor. Further, in the transparent conductor layer 63 are provided scanning signal lines 72 and data signal lines 73 which extend vertically and horizontally between the segment electrodes 71. By applying voltage to the segment electrodes 71 from the scanning signal lines 72 and the data signal lines 73, electric potential of the segment electrodes 71 changes, and the light transmittance of the liquid crystal layer 64 changes at positions corresponding to respective segments.

Here, the scanning signal lines 72 and the data signal lines 73 formed in the transparent conductor layer 63 are equivalent to a light-transmissible display conductor.

In this transparent conductor layer 63, narrow lines 4B which constitute loop coils serving as detection conductors are provided parallel with the data signal lines 73. Further, although not shown in the figure, narrow lines 4B which constitute loop coils of the loop coil group 42 are provided in the direction parallel with the scanning signal lines 72.

These narrow lines 4B are formed by dividing the planar transparent conductor layer 63 similarly to the segment electrodes 71, the scanning signal lines 72 and the data signal lines 73.

Further, base line portions 4A and branch-connecting portions 4D of loop coils in this case are provided outside a region where the segments are arranged in the liquid crystal display panel 6.

In the case where this liquid crystal display panel 6 shown in FIG. 10 is used as a display input portion 30, the loop coil groups 42 and 44 are formed in the transparent conductor layer 63 of the liquid crystal display panel 6, so that there is no need to provide the loop coil groups 42 and 44 being overlapped with the liquid crystal display panel 6. Therefore the display input portion 30 can further be made thin. Also, loop coils in the loop coil groups 42 and 44 are positioned not to attenuate light transmitted through the liquid crystal display panel 6, hence there is an advantage that display quality is not impaired at all.

Regarding the structure shown in FIG. 10, the narrow lines 4B are extremely thin. However, as described above, since the loop coils in the loop coil groups 42 and 44 have a structure in which a plurality of narrow lines 4B are provided to be used as a whole, sufficient electric current can flow and thus an operation conducted by a position indicator 2 can be detected without fail.

In the structure shown in FIG. 10, the data signal lines 73 may also function as the narrow lines 4B of the loop coils, or the scanning signal lines 72 may also function as the narrow lines 4B of the loop coils.

It should be noted that although cases in which loop coils of the loop coil groups 42 and 44 are made of two-turn coils have been explained in the above-mentioned embodiment and modified examples thereof, the present invention is not limited thereto. The number of turns of the loop coils can be arbitrarily decided.

Also, the display panel 5 formed by using a 12-inch liquid crystal display panel of XGA display has been explained as an example in the above-mentioned embodiment and modified examples thereof. However, size and resolution of a liquid crystal display panel can be arbitrarily decided, and the number of loop coils in the loop coil groups 42 and 44 should accordingly be decided depending on the size and resolution of a display panel 5.

Further, not only a liquid crystal display panel but also an organic EL (electroluminescence) display panel, PDP (plasma display panel), FED (field emission display) including SED (surface-conduction electron-emitter display) and the like can also be used for the display panel 5. If the display panel 5 is formed of a PDP, discharge cells vertically and/or horizontally disposed correspond to the pixels 50 in the above-mentioned embodiment. Also, if the display panel 5 is, for example, formed of an SED, electron sources and fluorescent substances vertically and/or horizontally disposed correspond to the pixels 50 in the above-mentioned embodiment. Further, it is possible to use a CRT (cathode ray tube) in place of the display panel 5. In this case, a combination of three dots disposed in respective divided regions on a screen, namely a combination of fluorescent substances corresponding to the three colors, corresponds to the pixel 50 in the above-mentioned embodiment.

Further, although in the above-mentioned embodiment and modified examples thereof the position indicator 2 indicates a position by sending and receiving radio signals with the position-detecting portion 4 (FIG. 3) incorporated in the tablet computer 3, the present invention is not limited thereto. For example, signals may be transmitted only in one direction, that is, from the position indicator 2 incorporating a power supply device to the position-detecting portion 4. Furthermore, for example, the position-detecting portion 4 may be configured as a detection circuit capable of detecting electrostatic capacity in the loop coil groups 42 and 44, or of detecting a change thereof. The position indicator 2, a finger of a user or the like is used as an indicator, and if the electrostatic capacity of the loop coil groups 42 and 44 has changed because of a position-inputting operation by the indicator, the position-inputting operation may be detected based on this change.

Further, although a structure in which the position-detecting portion 4 having the display input portion 30 is provided in the tablet computer 3 has been explained in the above-mentioned embodiment and modified examples thereof, the present invention is not limited thereto. The position-detecting portion 4 may be provided separately from a computer main unit which accommodates hardware equivalent to the functional portions (CPU 31, ROM 32, RAM 33, storage portion 34, input portion 35, display portion 36, I/F 37 and bus 38) shown in FIG. 7. In this case, there are such advantages that the position-detecting portion 4 operated by the user can be small-sized and that the position-detecting portion 4 can be used by being linked to a different computer unit.

Moreover, the present invention is not limited to the tablet computer explained in the above-mentioned embodiment and modified examples thereof, and can be applied widely to any kind of wirings provided on the display surface side of a display screen, in which visibility of screen is aimed at not being reduced by reducing visibility of wirings themselves, and the electric resistance value of wirings is reduced.

In addition to a computer system, the detecting conductor described above may be incorporated in electrical appliances such as a personal digital assistant, a digital camera, a mobile telephone, a smart phone, or a digital photograph viewer.

It should be understood by those skilled in the art that various modifications, combinations, sub-combinations and alterations may occur depending on design requirements and other factors insofar as they are within the scope of the appended claims or the equivalents thereof.
FIG. 5
   DISPLAY REGION
FIG. 7
   4 ... POSITION-DETECTING PORTION
   5 ... DISPLAY PANEL
   34 ... STORAGE PORTION
   35 ... INPUT PORTION
   36 ... DISPLAY PORTION
FIG. 8
   30 ... DISPLAY INPUT PORTION
   401 ... SWITCHING CIRCUIT
   402 ... CONTROLLER
   403 ... PROCESSOR
   410 ... SIGNAL GENERATOR
   420 ... SIGNAL DETECTOR
   426 ... ARITHMETIC CIRCUIT
FIG. 9
   DISPLAY REGION

## Claims

1. A sensor panel, wherein the sensor panel is part of a display device, the display device further comprising a display panel with a display region, the sensor panel being arrangeable over the display panel of the display device, the sensor panel comprising:
a plurality of detection conductors (42;44) forming loop coils (42-1, 42-2), the detection conductors having a first portion and a second portion, wherein the second portion is connected in series to the first portion, wherein the first portion is formed of a first conductor (4A) of a first width, wherein the second portion (4C) is formed of a plurality of second conductors (4B) connected in parallel, the second conductors having a second width, the first width being greater than the second width,
wherein at least a part of the plurality of said detection conductors (42;44) is overlapping with the display region of said display device, wherein said at least a part of the plurality of said detection conductors (42;44) is formed exclusively of said second portions.

2. A sensor panel according to claim 1,
wherein parallel wiring portions each including said second conductors disposed parallel are formed in said detection conductor; and
a space between the second conductors in each of the parallel wiring portions is equal to a space between said parallel wiring portions next to each other.

3. A sensor panel according to claim 2,
wherein the sensor panel comprising a plurality of pixels is provided such that the second conductors are positioned between each pair of adjacent pixels of said plurality of pixels wherein the plurality of pixels forms a screen of the display device, wherein the plurality of pixels is arranged in a predetermined direction, wherein the plurality of pixels is able to change its state.

4. A sensor panel according to claim 2,
wherein said display device displays screen by changing the state of a plurality of pixels arranged in a predetermined direction; and
the second conductors in said parallel wiring portions are provided on the borders between pixels adjacent to each other.

5. A sensor panel according to any one of claims 1 to 4,
wherein said detection conductor is formed of loop coils of one turn or a plurality of turns.

6. A sensor device according to any one of claims 1 to 5, wherein the second width is greater than 10 micrometers.

7. A sensor device according to any one of claims 1 to 6, wherein the second width is less than 30 micrometers.

8. A display device comprising:
a display (5) that includes
a light-transmissible display extending in the form of a plane and
a sensor panel according to any one of claims 1 to 5,
wherein the second conductor of the detection conductor is provided on or within the same plane on which said display is provided.

9. A position-detecting device comprising:
a sensor panel according to any one of claims 1 to 7, and
a detection circuit being adapted to detect a position-inputting operation conducted by an externalposition indicator, by detecting electromagnetic action between said detection conductors provided in said sensor panel and said position indicator.

10. A position-detecting device according to claim 9,
wherein said detection circuit includes:
a selector (401) adapted to select one detection conductor from a plurality of said detection conductors provided in said sensor panel,
a signal detector (420) adapted to detect a signal received by the detection conductor selected by said selector the signal transmitted from said position indicator, and
a detection processor (403) adapted to calculate a position indicated by said position indicator based on a signal detected by said signal detector.

11. A position-detecting device according to claim 9 or 10, further comprising:
a display device(5),
wherein said sensor panel is provided on or within said display device.

12. A position-inputting device comprising:
a position indicator (2)comprising at least one coil and a position-detecting device detecting a position-inputting operation conducted by said position indicator,
wherein said position-detecting device includes
a sensor panel according to any one of claims 1 to 7 and
a detection circuit (40) adapted to detect a position-inputting operation conducted by said position indicator, by detecting electromagnetic action between said detection conductors provided in said sensor panel and the coil(s) included in said position indicator.

13. An electrical appliance comprising the position input device of claim 12

14. The electrical appliance of claim 13 being a computer, personal digital assistant, digital camera, mobile telephone, smart phone, or digital photograph viewer.

15. A method of producing a sensor device; the method comprising:
- providing a display panel (5) of a display device, wherein a part of the display panel (5) is a display region;
- providing a sensor panel, the sensor panel being arrangeable over the display panel (5) of the display device,
- endowing the sensor panel with a plurality of detection conductors (42;44) forming loop coils (42-1, 42-2),
- forming a first portion and a second portion of the detection conductors (42;44) so that the second portion is connected in series to the first portion;
- forming the first portion of a first conductor (4A) of a first width;
- forming the second portion (4C) of a plurality of second conductors (4B) of a second width, the second conductors being connected in parallel,
wherein the first width is greater than the second width, wherein at least a part of the plurality of said detection conductors (42;44) is overlapping with the display region of said display device, wherein said at least a part of the plurality of said detection conductors (42;44) is formed exclusively of said second portions.

16. The method according to claim 15, wherein a first group of the second portions is superimposed on the display panel (5) of the display device, wherein an insulating layer (43) is superposed on said group of second portions, wherein a second group of the second portions is superimposed on the insulating layer.

17. The method of claim 16, wherein the insulating layer is formed by coating, vapor deposition, printing or adhesion.

18. The method of claims 16 or 17 wherein the first and second loop coil groups are formed from an opaque conductor.

19. The method of claims 16 or 17 wherein the first and second loop coil groups are formed from a transparent conductor.

20. The method of claims 16 to 19 wherein the first and second loop coil groups are formed by coating, vapor deposition, printing or adhesion.

21. The method of claim 16 to 19 wherein the first and second loop coil groups are formed by etching planar conductors.

22. The method of claims 16 to 21 wherein the conductor (4C) of the first loop coil group and/or the second loop coil group are formed on top of the display or within an inner layer of the display.

## Patentansprüche

1. Sensorfeld, wobei das Sensorfeld Teil einer Anzeigevorrichtung ist, wobei die Anzeigevorrichtung ferner ein Anzeigefeld mit einer Anzeigeregion aufweist, wobei das Sensorfeld über dem Anzeigefeld der Anzeigevorrichtung angeordnet werden kann, wobei das Sensorfeld aufweist:
eine Mehrzahl von Detektionsleitern (42; 44), die Schleifenspulen (42-1, 42-2) bilden, wobei die Detektionsleiter einen ersten Abschnitt und einen zweiten Abschnitt aufweisen, wobei der zweite Abschnitt in Reihe mit dem ersten Abschnitt verbunden ist, wobei der erste Abschnitt aus einem ersten Leiter (4A) gebildet ist, welcher eine erste Breite aufweist, wobei der zweite Abschnitt (4C) aus einer Mehrzahl von zweiten Leitern (4B) gebildet ist, die parallel geschaltet sind, wobei die zweiten Leiter eine zweite Breite aufweisen, wobei die erste Breite größer ist als die zweite Breite,
wobei zumindest ein Teil von der Mehrzahl von Detektionsleitern (42; 44) die Anzeigeregion der Anzeigevorrichtung überlappt, wobei zumindest der eine Teil von der Mehrzahl von Detektionsleitern (42; 44) ausschließlich aus den zweiten Abschnitten gebildet ist.

2. Sensorfeld nach Anspruch 1,
wobei parallele Verdrahtungsabschnitte, die jeweils die zweiten, parallel angeordneten Leiter beinhalten, in dem Detektionsleiter ausgebildet sind; und
ein Abstand zwischen den zweiten Leitern in den einzelnen Verdrahtungsabschnitten einem Abstand zwischen den parallelen Verdrahtungsabschnitten, die einander benachbart sind, gleich ist.

3. Sensorfeld nach Anspruch 2,
wobei das Sensorfeld, das eine Mehrzahl von Pixeln aufweist, so vorgesehen ist, dass die zweiten Leiter zwischen jeweils zwei aneinander angrenzenden Pixeln von der Mehrzahl von Pixeln angeordnet sind, wobei die Mehrzahl von Pixeln einen Bildschirm der Anzeigevorrichtung bildet, wobei die Mehrzahl von Pixeln in einer vorgegebenen Richtung angeordnet ist, wobei die Mehrzahl von Pixeln in der Lage ist, ihren Zustand zu verändern.

4. Sensorfeld nach Anspruch 2,
wobei die Anzeigevorrichtung einen Bildschirm durch Ändern des Zustands einer Mehrzahl von Pixeln, die in einer vorgegebenen Richtung angeordnet ist, anzeigt; und
die zweiten Leiter in den parallelen Verdrahtungsabschnitten an den Grenzen zwischen Pixeln, die aneinander angrenzen, vorgesehen sind.

5. Sensor nach einem der Ansprüche 1 bis 4,
wobei der Detektionsleiter aus Schleifenspulen mit einer Windung oder einer Mehrzahl von Windungen gebildet ist.

6. Sensorvorrichtung nach einem der Ansprüche 1 bis 5, wobei die zweite Breite größer ist als 10 Mikrometer.

7. Sensorvorrichtung nach einem der Ansprüche 1 bis 6, wobei die zweite Breite kleiner ist als 30 Mikrometer.

8. Anzeigevorrichtung, aufweisend:
eine Anzeige (5), die aufweist:
eine lichtdurchlässige Anzeige, die sich in Form einer Ebene erstreckt, und
ein Sensorfeld nach einem der Ansprüche 1 bis 5,
wobei der zweite Leiter des Detektionsleiters auf oder in der gleichen Ebene vorgesehen ist, auf der die Anzeige vorgesehen ist.

9. Positionserfassungsvorrichtung, aufweisend:
ein Sensorfeld nach einem der Ansprüche 1 bis 7, und
eine Detektionsschaltung, die dafür ausgelegt ist, eine Positionseingabeoperation, die von einem externen Positionsindikator ausgeführt wird, durch Erfassen einer elektromagnetischen Wirkung zwischen den Detektionsleitern, die in dem Sensorfeld vorgesehen sind, und dem Positionsindikator zu erfassen.

10. Positionserfassungsvorrichtung nach Anspruch 9,
wobei die Detektionsschaltung aufweist:
einen Selektor (401), der dafür ausgelegt ist, einen Detektionsleiter aus einer Mehrzahl von Detektionsleitern, die in dem Sensorfeld vorgesehen sind, auszuwählen,
einen Signaldetektor (420), der dafür ausgelegt ist, ein Signal, das von dem Detektionsleiter empfangen wird, welcher vom Selektor ausgewählt worden ist, zu erfassen, wobei das Signal vom Positionsindikator gesendet wird, und
einen Detektionsprozessor (403), der dafür ausgelegt ist, eine Position, die vom Positionsindikator angezeigt wird, auf Basis eines Signals, das vom Signaldetektor erfasst wird, zu berechnen.

11. Positionsdetektionsvorrichtung nach Anspruch 9 oder 10, ferner aufweisend:
eine Anzeigevorrichtung (5),
wobei das Sensorfeld auf oder in der Anzeigevorrichtung vorgesehen ist.

12. Positionseingabevorrichtung, aufweisend:
einen Positionsindikator (2), der mindestens eine Spule aufweist, und eine Positionsdetektionsvorrichtung, die eine Positionseingabeoperation erfasst, die vom Positionsindikator durchgeführt wird,
wobei die Positionsdetektionsvorrichtung aufweist:
ein Sensorfeld nach einem der Ansprüche 1 bis 7, und
eine Detektionsschaltung (40), die dafür ausgelegt ist, durch Erfassen einer elektromagnetischen Wirkung zwischen den Detektionsleitern, die in dem Sensorfeld vorgesehen sind, und der mindestens einen Spule, die im Positionsindikator enthalten ist, eine Positionseingabeoperation zu erfassen, die vom Positionsindikator durchgeführt wird.

13. Elektrisches Gerät, die Positionseingabevorrichtung von Anspruch 12 aufweisend.

14. Elektrisches Gerät nach Anspruch 13, bei dem es sich um einen Computer, einen persönlichen digitalen Assistenten, eine digitale Kamera, ein mobiles Telefon, ein Smart Phone oder ein digitales Fotobetrachtungsgerät handelt.

15. Verfahren zur Herstellung einer Sensorvorrichtung; wobei das Verfahren umfasst:
- Bereitstellen eines Anzeigefeldes (5) einer Anzeigevorrichtung, wobei ein Teil des Anzeigefeldes (5) eine Anzeigeregion ist;
- Bereitstellen eines Sensorfeldes, wobei das Sensorfeld über dem Anzeigefeld (5) der Anzeigevorrichtung angeordnet werden kann,
- Ausstatten des Sensorfeldes mit einer Mehrzahl von Detektionsleitern (42; 44), die Schleifenspulen (42-1, 42-2) bilden,
- Bilden eines ersten Abschnitts und eines zweiten Abschnitts der Detektionsleiter (42; 44), so dass der zweite Abschnitt in Reihe mit dem ersten Abschnitt verbunden ist;
- Bilden des ersten Abschnitts aus einem ersten Leiter (4A) mit einer ersten Breite;
- Bilden des zweiten Abschnitts (4C) aus einer Mehrzahl von zweiten Leitern (4B) mit einer zweiten Breite, wobei die zweiten Leiter parallel geschaltet sind,
wobei die erste Breite größer ist als die zweite Breite, wobei mindestens ein Teil der Mehrzahl der Detektionsleiter (42; 44) die Anzeigeregion der Anzeigevorrichtung überlappt, wobei der mindestens eine Teil von der Mehrzahl von Detektionsleitern (42; 44) ausschließlich aus den zweiten Abschnitten gebildet ist.

16. Verfahren nach Anspruch 15, wobei eine erste Gruppe von den zweiten Abschnitten über das Anzeigefeld (5) der Anzeigevorrichtung gelegt wird, wobei eine Isolierschicht (43) über die Gruppe aus den zweiten Abschnitten gelegt wird, wobei eine zweite Gruppe aus den zweiten Abschnitten über die Isolierschicht gelegt wird.

17. Verfahren nach Anspruch 16, wobei die Isolierschicht durch Beschichten, Dampfabscheiden, Drucken oder Anhaftenlassen ausgebildet wird.

18. Verfahren nach Anspruch 16 oder 17, wobei die ersten und zweiten Schleifenspulengruppen aus einem lichtundurchlässigen Leiter gebildet sind.

19. Verfahren nach Anspruch 16 oder 17, wobei die ersten und zweiten Schleifenspulengruppen aus einem lichtdurchlässigen Leiter gebildet sind.

20. Verfahren nach einem der Ansprüche 16 bis 19, wobei die ersten und zweiten Schleifenspulengruppen durch Beschichten, Dampfabscheiden, Drucken oder Anhaftenlassen gebildet werden.

21. Verfahren nach einem der Ansprüche 16 bis 19, wobei die ersten und zweiten Schleifenspulengruppen durch Ätzen von planen Leitern gebildet werden.

22. Verfahren nach einem der Ansprüche 16 bis 21, wobei der Leiter (4C) der ersten Schleifenspulengruppe und/oder der zweiten Schleifenspulengruppe oben auf der Anzeige oder innerhalb einer inneren Schicht der Anzeige ausgebildet ist bzw. sind.

## Revendications

1. Panneau de capteurs, dans lequel le panneau de capteurs fait partie d'un dispositif d'affichage, le dispositif d'affichage comprenant en outre un panneau d'affichage avec une zone d'affichage, le panneau de capteurs pouvant être agencé par-dessus le panneau d'affichage du dispositif d'affichage, le panneau de capteurs comprenant :
une pluralité de conducteurs de détection (42 ; 44) formant des bobines en boucle (42-1, 42-2), les conducteurs de détection possédant une première partie et une deuxième partie, dans lequel la deuxième partie est reliée en série à la première partie, dans lequel la première partie est constituée d'un premier conducteur (4A) d'une première largeur, dans lequel la deuxième partie (4C) est constituée d'une pluralité de deuxièmes conducteurs (4B) reliés en parallèle, les deuxièmes conducteurs présentant une deuxième largeur, la première largeur étant supérieure à la deuxième largeur,
dans lequel au moins une partie de la pluralité desdits conducteurs de détection (42 ; 44) chevauche la zone d'affichage dudit dispositif d'affichage, dans lequel ladite au moins une partie de la pluralité desdits conducteurs de détection (42 ; 44) est formée exclusivement par lesdites deuxièmes parties.

2. Panneau de capteurs selon la revendication 1,
dans lequel des parties de câblage parallèle comprenant chacune lesdits deuxièmes conducteurs disposés en parallèle sont formées dans ledit conducteurs de détection, et
un espace entre les deuxièmes conducteurs dans chacune des parties de câblage parallèle est égal à un espace entre lesdites parties de câblage parallèle adjacentes.

3. Panneau de capteurs selon la revendication 2,
dans lequel
le panneau de capteurs comprenant une pluralité de pixels est conçu de manière à ce que les deuxièmes conducteurs soient positionnés entre chaque paire de pixels adjacents de ladite pluralité de pixels, dans lequel la pluralité de pixels forme un écran du dispositif d'affichage, dans lequel la pluralité de pixels est agencée dans une direction prédéterminée, dans lequel la pluralité de pixels est capable de modifier son état.

4. Panneau de capteurs selon la revendication 2,
dans lequel ledit dispositif d'affichage affiche l'écran en modifiant l'état d'une pluralité de pixels agencés dans une direction prédéterminée ; et
les deuxièmes conducteurs dans lesdites parties de câblage parallèle sont disposés aux frontières entre des pixels adjacents.

5. Panneau de capteurs selon l'une quelconque des revendications 1 à 4,
dans lequel ledit conducteur de détection est constitué de bobines en boucle à une spire ou à plusieurs spires.

6. Dispositif de détection selon l'une quelconque des revendications 1 à 5, dans lequel la deuxième largeur est supérieure à 10 micromètres.

7. Dispositif de détection selon l'une quelconque des revendications 1 à 6, dans lequel la deuxième largeur est inférieure à 30 micromètres.

8. Dispositif d'affichage comprenant :
un affichage (5) comprenant
un affichage transmettant la lumière, qui s'étend sous la forme d'un plan, et
un panneau de capteurs selon l'une quelconque des revendications 1 à 5,
dans lequel le deuxième conducteur du conducteur de détection est disposé sur ou dans le même plan que ledit affichage.

9. Dispositif de détection de position comprenant :
un panneau de capteurs selon l'une quelconque des revendications 1 à 7, et
un circuit de détection adapté pour détecter une opération de saisie de position exécutée par un indicateur de position externe, en détectant l'action électromagnétique entre lesdits conducteurs de détection prévus dans ledit panneau de capteurs et ledit indicateur de position.

10. Dispositif de détection de position selon la revendication 9,
dans lequel ledit circuit de détection comprend :
un sélecteur (401) adapté pour sélectionner un conducteur de détection parmi une pluralité desdits conducteurs de détection prévus dans ledit panneau de capteurs,
un détecteur de signal (420) adapté pour détecter un signal reçu par le conducteur de détection sélectionné par ledit sélecteur, le signal étant transmis par ledit indicateur de position, et
un processeur de détection (403) adapté pour calculer une position indiquée par ledit indicateur de position sur la base d'un signal détecté par ledit détecteur de signal.

11. Dispositif de détection de position selon la revendication 9 ou 10, comprenant en outre :
un dispositif d'affichage (5),
dans lequel ledit panneau de capteurs est disposé sur ou dans ledit dispositif d'affichage.

12. Dispositif de saisie de position, comprenant :
un indicateur de position (2) comprenant au moins une bobine et un dispositif de détection de position détectant une opération de saisie de position exécutée par ledit indicateur de position ;
dans lequel ledit dispositif de détection de position comprend :
un panneau de capteurs selon l'une quelconque des revendications 1 à 7, et
un circuit de détection (40) adapté pour détecter une opération de saisie de position exécutée par ledit indicateur de position, en détectant une action électromagnétique entre lesdits conducteurs de détection prévus dans ledit panneau de capteurs et la/les bobine(s) comprises dans ledit indicateur de position.

13. Appareil électrique comprenant le dispositif de saisie de position de la revendication 12.

14. Appareil électrique selon la revendication 13, dans lequel il s'agit d'un ordinateur, un assistant numérique personnel, un appareil photo numérique, un téléphone portable, un smart phone, ou un lecteur photo numérique.

15. Procédé pour la fabrication d'un dispositif de détection, le procédé comprenant :
- la mise à disposition d'un panneau d'affichage (5) d'un dispositif d'affichage, dans lequel une partie du panneau d'affichage (5) est une zone d'affichage ;
- la mise à disposition d'un panneau de capteurs, le panneau de capteurs pouvant être agencé par-dessus le panneau d'affichage (5) du dispositif d'affichage,
- attribution d'une pluralité de conducteurs de détection (42 ; 44) formant des bobines en boucle (42-1, 42-2) au panneau de capteurs,
- formation d'une première partie et d'une deuxième partie des conducteurs de détection (42 ; 44), de manière à ce que la deuxième partie soit reliée en série à la première partie,
- formation de la première partie d'un premier conducteur (A4) d'une première largeur ;
- formation de la deuxième partie (4C) d'une pluralité de deuxièmes conducteurs (4B) d'une deuxième largeur, les deuxièmes conducteurs étant reliés en parallèle,
dans lequel la première largeur est supérieure à la deuxième largeur, dans lequel au moins une partie de la pluralité de conducteurs de détection (42 ; 44) chevauche la zone d'affichage dudit dispositif d'affichage, dans lequel ladite au moins une partie de la pluralité de conducteurs de détection (42 ; 44) est formée exclusivement par lesdites deuxièmes parties.

16. Procédé selon la revendication 15, dans lequel un premier groupe des deuxièmes parties est superposé sur le dispositif d'affichage (5) du dispositif d'affichage, dans lequel une couche isolante (43) est superposée sur ledit groupe de deuxièmes parties, dans lequel un deuxième groupe de deuxièmes parties est superposée sur la couche isolante.

17. Procédé selon la revendication 16, dans lequel la couche isolante est formée par revêtement, dépôt de vapeur, impression ou collage.

18. Procédé selon les revendications 16 ou 17, dans lequel les premier et deuxième groupes de bobines en boucle sont constitués d'un conducteur opaque.

19. Procédé selon les revendications 16 ou 17, dans lequel les premier et deuxième groupes de bobines en boucle sont constitués d'un conducteur transparent.

20. Procédé selon les revendications 16 à 19, dans lequel les premier et deuxième groupes de bobines en boucle sont formés par revêtement, dépôt de vapeur, impression ou collage.

21. Procédé selon la revendication 16 à 19, dans lequel les premier et deuxième groupes de bobines en boucle sont formés par attaque chimique de conducteurs planaires.

22. Procédé selon les revendications 16 à 21, dans lequel le conducteur (4C) du premier groupe de bobines en boucle et/ou du deuxième groupe de bobines en boucle est/sont formé(s) sur l'affichage ou dans une couche intérieure de l'affichage.
